# EUROPEAN PATENT APPLICATION

(11) **EP 4 450 536 A1**
(43) Date of publication of application: **23.10.2024**
(21) Application number: 22907231.9
(22) Date of filing: 01.12.2022
(51) Int. Cl.: C08G 65/18, C08G 59/32, C08K 3/22, C08L 63/00, C09D 7/20, C09D 7/61, C09D 163/00, C09D 171/02, G02B 1/14

(54) **LIQUID COMPOSITION, HARD COAT LAYER, AND SPECTACLE LENS**

(30) Priority: 13.12.2021 JP 2021201827
(71) Applicant: Nikon-Essilor Co., Ltd., Tokyo 130-0026 (JP)
(72) Inventor: SATO, Tetsuo, Tokyo 130-0026 (JP)
(74) Representative: Hoffmann Eitle
(86) International application number: PCT/JP2022/044405
(87) International publication number: WO 2023/112703

(57) **Abstract**

An object of the present invention is to provide a liquid composition capable of forming a hard coat layer having excellent toughness. The liquid composition of the invention includes a polymer obtained by cationically polymerizing a cationic polymerizable group in a cationic polymerizable group-containing compound, the cationic polymerizable group being selected from the group consisting of an epoxy group and an oxetanyl group.

## Description

### TECHNICAL FIELD

The present disclosure relates to a liquid composition, a hard coat layer, and a spectacle lens.

### BACKGROUND ART

Known is an epoxy resin molded article which is formed by curing a composition containing at least an epoxy resin and inorganic oxide particles (claim 1 of Patent Literature 1, for example).

### CITATION LIST

### PATENT LITERATURE

Patent Literature 1: JP 2004-250521 A

### SUMMARY OF INVENTION

The present disclosure relates to a liquid composition comprising a polymer obtained by cationically polymerizing a cationic polymerizable group in a cationic polymerizable group-containing compound, the cationic polymerizable group being selected from the group consisting of an epoxy group and an oxetanyl group.

### BRIEF DESCRIPTION OF DRAWINGS

[FIG. 1] FIG. 1 is a cross-sectional view of a spectacle lens.
[FIG. 2] FIG. 2 is a view of scratches in toughness evaluation of Example 1.
[FIG. 3] FIG. 3 is a view of scratches in toughness evaluation of Example 2.
[FIG. 4] FIG. 4 is a view of scratches in toughness evaluation of Comparative Example 1.
[FIG. 5] FIG. 5 is a view of scratches in toughness evaluation of Comparative Example 2.

### DESCRIPTION OF EMBODOIMENT

A liquid composition of the present disclosure is described in detail below.

A hard coat layer of a spectacle lens is required to have excellent toughness. A layer formed using the liquid composition of the present disclosure is usable as a hard coat layer having the foregoing characteristics.

In the description, the term "to" given between numerical values is used to mean that the numerical values are included in a range as the upper and lower limits thereof.

In the description, the term "boiling point" means boiling point at one atmospheric pressure.

In the description, a solid content of a liquid composition refers to a component that forms a film (hard coat layer) through curing treatment and does not include a solvent. It should be noted that any component that forms a film is calculated as a solid even if the component takes on a liquid form at ordinary temperature and atmospheric pressure (25°C and 101.3 kPa). The solid content also includes a component that chemically changes in the process of forming a hard coat layer.

The liquid composition is described in detail below.

### <Liquid Composition>

The liquid composition of the present disclosure comprises a polymer (hereinafter, also referred to as "specific polymer") obtained by cationically polymerizing a cationic polymerizable group (hereinafter, also referred to as "specific cationic polymerizable group") in a cationic polymerizable group-containing compound (hereinafter, also referred to as "compound A"), the cationic polymerizable group being selected from the group consisting of an epoxy group and an oxetanyl group.

The liquid composition means that the composition itself is in the form of liquid. In order for the composition to take on the form of liquid composition, the specific polymer itself may be in the form of liquid, or a liquid medium (such as a liquid compound, an organic solvent, or water, for instance) may be added to the specific polymer to thereby obtain the composition in a liquid form. Here, a liquid form means taking on the form of liquid at one atmospheric pressure and temperature of 25°C.

In other words, the liquid composition may be a composition in the form of liquid constituted of the specific polymer only, or may be a composition in the form of liquid comprising the specific polymer and another component (particularly, liquid medium) than the specific polymer.

### (Specific Polymer)

The specific polymer is a polymer obtained by cationically polymerizing the specific cationic polymerizable group in the compound A.

The specific polymer preferably contains the specific cationic polymerizable group. The number of the specific cationic polymerizable groups contained in the specific polymer is preferably more than one.

The specific polymer is a polymer obtained by cationically polymerizing the compound A and is a so-called prepolymer. It is preferable that the compound A is cationically polymerized such that the specific cationic polymerizable group contained in the compound A is not entirely consumed but remains through cationic polymerization to thereby obtain the specific polymer containing the specific cationic polymerizable group.

The specific polymer is preferably obtained by cationically polymerizing the cationic polymerizable group in the compound A in a solution containing a protic solvent. That is, for cationically polymerizing the compound A, cationic polymerization preferably takes place in a solvent containing a protic solvent, and more preferably takes place in a solution containing a solvent selected from the group consisting of water and an alcohol solvent.

A single kind of the specific polymer or two or more kinds thereof may be used.

The specific polymer content with respect to the total solids of the liquid composition is not particularly limited and can be appropriately adjusted.

### (Inorganic Particles)

The liquid composition may contain inorganic particles.

When the liquid composition contains inorganic particles, the obtained film can have higher hardness.

The inorganic particles are particles that are different from the compound A to be described later.

Examples of the inorganic particles include particles of one or more metals selected from the group consisting of Ti, Zr, Si, Al, Sn, Sb, Ta, Ce, La, Fe, Zn, W, and In, and composite particles thereof. Particles of one or more metals selected from the group consisting of Ti, Zr, Si, Al, and Sn, and composite particles thereof are preferred. Composite particles refer to metal particles containing two or more metals (atoms of two or more metals). Meanwhile, Si (silicon) is treated as metal.

For the inorganic particles, inorganic oxide particles are preferred.

The inorganic oxide particles can serve as a cationic polymerization initiator. While the specific reason why the inorganic oxide particles can serve as a cationic polymerization initiator is unknown, presumably, protic cations are supplied from surfaces of the inorganic oxide particles, which protic cations can promote cationic polymerization. As with a cationic polymerization initiator, the inorganic oxide particles can serve as a cationic polymerization initiator for cationically polymerizing the compound A. The inorganic oxide particles can provide the same effect (achievement of high hardness of a film) as that of a cationic polymerization initiator.

Examples of the inorganic oxide particles include oxide particles of one or more metals selected from the group consisting of Ti, Zr, Si, Al, Sn, Sb, Ta, Ce, La, Fe, Zn, W, and In, and composite oxide particles thereof. The composite oxide particles refer to oxide particles containing two or more metals (atoms of two or more metals).

The inorganic oxide particles may preferably be one or more kinds of metal oxide particles selected from the group consisting of SiO₂ (silica dioxide), Al₂O₃ (aluminum oxide), SnO₂ (tin oxide), ZrO₂ (zirconium oxide), and TiO₂ (titanium oxide), and more preferably one or more kinds of metal oxide particles selected from the group consisting of SiO₂ and ZrO₂.

As an example of the inorganic oxide particles, particles of one or more inorganic oxides selected from the group consisting of titanium oxide, zirconium oxide, silicon oxide, tin oxide, aluminum oxide, and composite oxides thereof are dispersed in water or an organic solvent to form a sol. The inorganic oxide particles may be core-shell type particles.

The inorganic particles may be surface-treated.

Examples of surface treatment include introduction of various functional groups and treatments using known surface treatment agents.

The average particle size of the inorganic particles is often 0.5 to 70 nm, and preferably 1 to 50 nm.

An example of the method for measuring the average particle size is a method using a laser analysis particle size distribution analyzer. The foregoing average particle size can be determined also by measuring diameters of at least 20 inorganic particles with a transmission electron microscope and calculating the arithmetic mean of the measurements. When inorganic particles do not have a perfect circle shape, the major axis length is taken as the diameter.

A single kind of the inorganic particles or two or more kinds thereof may be used.

The inorganic particle content is preferably 10 to 70 mass%, more preferably 20 to 65 mass%, and even more preferably 30 to 60 mass% with respect to the total solids of the liquid composition.

### (Protic Solvent)

The liquid composition may contain a protic solvent.

The protic solvent preferably contains a solvent selected from the group consisting of water and an alcohol solvent.

The protic solvent may be the same as or different from the protic solvent used in the cationic polymerization process in the method of manufacturing the liquid composition described later.

The alcohol solvent is a solvent having one or more hydroxyl groups.

For the alcohol solvent, primary to tertiary alcohol solvents are preferred. For the sake of high performance as a chain transfer agent, a primary alcohol solvent and a secondary alcohol solvent are more preferred, and a primary alcohol solvent is even more preferred.

Examples of the alcohol solvent include methanol, ethanol, 1-propanol, isopropanol, and 1-butanol.

A single kind of the alcohol solvent or two or more kinds thereof may be used.

The alcohol solvent content is preferably 10 to 70 mass%, more preferably 15 to 65 mass%, and even more preferably 20 to 60 mass% with respect to the total solids of the liquid composition.

### (Compound B)

The liquid composition may contain a compound B.

The compound B comprises one or more kinds of compounds selected from the group consisting of a curing agent and a polymerization initiator.

Examples of the curing agent include an amine-based curing agent (such as jERCURE ST-11 available from Mitsubishi Chemical Corporation) and an acid anhydride (such as jERCURE YH306 available from Mitsubishi Chemical Corporation).

Examples of the polymerization initiator include a photopolymerization initiator and a thermal polymerization initiator, and a thermal polymerization initiator is preferred. The polymerization initiator may be any of a radical polymerization initiator, a cationic polymerization initiator, or an anionic polymerization initiator, and a cationic polymerization initiator is preferred.

When the liquid composition contains a cationic polymerization initiator, the cationic polymerization initiator may be a cationic polymerization initiator used for cationically polymerizing the compound A. That is, the cationic polymerization initiator used for cationically polymerizing the compound A may remain in the liquid composition, and an additional polymerization initiator different from the foregoing cationic polymerization initiator may be added to the liquid composition.

Examples of the polymerization initiator include thermal cationic polymerization initiators such as Ciracure UVI-6992 and UVI-6974 (available from Dow Chemical Japan Limited), ADEKA OPTOMER SP150, SP152, SP170, and SP172 (available from Adeka Corporation), IRGACURE250 (available from Ciba Specialty Chemicals), CI-5102 and CI-2855 (available from Nippon Soda Co., Ltd.), SAN-AID SI-60L, SI-80L, SI-100L, SI-110L, and SI-180L (available from SANSHIN CHEMICAL INDUSTRY CO., LTD.), CPI-100 and CPI-100A (available from San-Apro Ltd.), WPI-069, WPI-113, WPI-116, WPI-041, WPI-044, WPI-054, WPI-055, WPAG-281, WPAG-567, and WPAG-596 (available from FUJIFILM Wako Pure Chemical Corporation); and photopolymerization initiators such as Omnirad 127, 184, 907, 651, 1700, 1800, 819, 369, and TPO (available from IGM Resins B.V.), DAROCUR 1173 (available from Sigma-Aldrich), ESACURE KIP 150 and TZT (available from Siber Hegner Japan), and Kayacure BMS and Kayacure DMBI (available from Nippon Kayaku Co., Ltd.).

As the cationic polymerization initiator, a phosphorous photopolymerization initiator, SP150 (available from Adeka Corporation) or an antimony-based thermal polymerization initiator, SI-100L (available from SANSHIN CHEMICAL INDUSTRY CO., LTD.) is preferred.

In view of capability to easily control the reaction, the foregoing inorganic particles with low catalytic activity may be used as the cationic polymerization initiator. An acid radical that may be present on surfaces of the inorganic particles can serve as the cationic polymerization initiator.

A single kind of the compound B or two or more kinds thereof may be used.

The compound B content is preferably 0.001 to 5 mass%, and more preferably 0.01 to 1 mass% with respect to the total solids of the liquid composition.

### (Surfactant)

The liquid composition may contain a surfactant.

An example of the surfactant is a silicone compound such as silicone oil (for example, DOWSIL series available from The Dow Chemical Company).

A single kind of the surfactant or two or more kinds thereof may be used.

The surfactant content is preferably 0.001 to 5 mass%, and more preferably 0.01 to 0.5 mass% with respect to the total solids of the liquid composition.

### (Sensitizer)

The liquid composition may contain a sensitizer.

An example of the sensitizer is ANTHRACURE series available from Kawasaki Kasei Chemicals Ltd.

A single kind of the sensitizer or two or more kinds thereof may be used.

The sensitizer content is preferably 0.001 to 5 mass%, and more preferably 0.05 to 2 mass% with respect to the total solids of the liquid composition.

### (UV Absorber)

The liquid composition may contain a UV absorber.

Examples of the UV absorber include a triazine compound and a benzotriazole compound.

A single kind of the UV absorber or two or more kinds thereof may be used.

The UV absorber content is preferably 0.01 to 5 mass%, and more preferably 0.1 to 3 mass% with respect to the total solids of the liquid composition.

### (Other Components)

The liquid composition may contain components other than the foregoing components.

Examples of the other components include the compound A described later, a solvent other than the protic solvent, a chain transfer agent other than the protic solvent, and, from the viewpoint of controlling crosslink density, a compound including one or two specific cationic polymerizable groups.

A single kind of the other component or two or more kinds thereof may be used.

As the other solvent, an organic solvent that can be mixed with water or an alcohol solvent at an arbitrary ratio.

Examples of the organic solvent include a ketone solvent, an ether solvent, an ester solvent, an amide solvent, a sulfone solvent, and a sulfoxide solvent.

Examples of the ketone solvent include methyl ethyl ketone, methyl butyl ketone, and propylene glycol monomethyl ether acetate.

Examples of the other chain transfer agent include a thiol compound, a thioether compound, a thioester compound, and a phosphate ester compound.

A specific example thereof is Karenz (registered trademark) series (e.g., PE1, BD1, NR1, and TPMB available from Showa Denko K.K.).

Another example of the other chain transfer agent is an epoxy compound. The epoxy compound can serve as a chain transfer agent for an oxetanyl group and can be copolymerized with an oxetanyl group.

Examples of the compound including one or two specific cationic polymerizable groups include ARON OXETANE (registered trademark) series (e.g., OXT-101, OXT-212, OXT-121, and OXT-221 available from TOAGOSEI Co., Ltd.), and DENACOL series (e.g., EX-121, EX-146, EX-171, EX-810, and EX-211 available from Nagase ChemteX Corporation).

The viscosity (20°C) of the liquid composition can be appropriately adjusted. The viscosity of the liquid composition is often 100,000 cP or lower, may be 10,000 cP or lower, and may be even 1,000 cP or lower. The lower limit thereof is often 0.5 cP or higher.

The measurement of the foregoing viscosity can be carried out using a known measurement apparatus (e.g., cone and plate viscometer).

The method of manufacturing the liquid composition is described in detail below.

### <Method of Manufacturing Liquid Composition>

The method of manufacturing the liquid composition is not particularly limited as long as it is a method involving cationically polymerizing the specific cationic polymerizable group in the compound A, for example.

The method of manufacturing the liquid composition preferably includes a cationic polymerization step of cationically polymerizing the specific cationic polymerizable group included in the compound A in a solution containing the protic solvent.

By cationically polymerizing the compound A in the solution containing the protic solvent, a hydroxyl group in the protic solvent serves as a chain transfer agent, and the cationic polymerization reaction of the compound A can be controlled, whereby gelation can be prevented. The specific polymer obtained by the above-described method tends to have the specific cationic polymerizable group.

The method of manufacturing the liquid composition is described in detail below, taking the cationic polymerization step using the foregoing protic solvent as an example.

Meanwhile, the protic solvent is as described above.

### (Cationic Polymerization Step)

The cationic polymerization step is a step of cationically polymerizing the specific cationic polymerizable group included in the compound A in the solution containing the protic solvent. By carrying out this step, the specific polymer can be synthesized.

Exemplary methods of cationically polymerizing the compound A include a known cationic polymerization, and a cationic polymerization method using a specific polymer-synthesizing composition to be described later is preferred.

The specific polymer-synthesizing composition can be produced by mixing various components that can be contained in the specific polymer-synthesizing composition, for example.

In the mixing process, the various components that can be contained in the specific polymer-synthesizing composition may be added in separate steps or added at one time. When the components are added in separate steps, the same component may be added in separate steps, or different components may be added in separate steps.

An example of the mixing method is a method using a known agitator.

In the process of cationic polymerization, heating is preferably performed from the viewpoint of promoting polymerization reaction (particularly, in a case where the compound A having an oxetanyl group is used).

The heating method is not particularly limited, and exemplary methods include a known method.

The heating temperature can be appropriately adjusted depending on the solvent that can be contained in the specific polymer-synthesizing composition and the heating conditions. For instance, the heating temperature is often 40 to 120°C.

The heating time of the heating treatment can be appropriately adjusted depending on the solvent that can be contained in the specific polymer-synthesizing composition and the heating conditions. For instance, the heating time is often 10 minutes to 7 hours.

The atmospheric pressure in the heating may be either ordinary pressure, reduced pressure, or increased pressure. The heating may be performed in a tightly closed state or in a refluxed state.

### - Specific Polymer-synthesizing Composition -

The specific polymer-synthesizing composition is a composition used in the above-described cationic polymerization step.

The specific polymer-synthesizing composition preferably contains the compound A, a solvent including a protic solvent, and a cationic polymerization initiator or inorganic particles, and more preferably, the specific polymer-synthesizing composition is substantially consisted only of the compound A, a solvent including a protic solvent, and a cationic polymerization initiator or inorganic particles. Specifically, the total content of the compound A, the protic solvent, and the cationic polymerization initiator or inorganic particles is preferably 80 mass% or more, more preferably 90 mass% or more, and even more preferably 95 mass% or more with respect to the total mass of the specific polymer-synthesizing composition. The upper limit thereof is preferably 100 mass% or less with respect to the total mass of the specific polymer-synthesizing composition.

The protic solvent, the cationic polymerization initiator, and the inorganic particles are as described above.

The inorganic particles may partly remain as inorganic particles that can be contained in the liquid composition. The cationic polymerization initiator may partly remain as the cationic polymerization initiator of the compound B that can be contained in the liquid composition.

The specific polymer-synthesizing composition preferably contains the compound A.

The compound A is a compound having the specific cationic polymerizable group.

The number of specific cationic polymerizable groups included in the compound A is one or more, preferably two or more, even more preferably three or more, and yet more preferably four or more.

The compound A may have other functional groups than the specific cationic polymerizable group. Examples of the other functional groups include a cationic polymerizable group other than the specific cationic polymerizable group and ethylenically unsaturated groups such as an acryloyl group, a methacryloyl group, a vinyl group, and a styryl group.

For the compound A, silsesquioxane or a derivative thereof is preferred.

Silsesquioxane or a derivative thereof is a silane compound having a basic structure represented by Formula (Q) that is obtained through hydrolysis of a trifunctional silane compound such as alkoxysilane, chlorosilane, or silanol. Examples of the structure of silsesquioxane or a derivative thereof include an irregular form called a random structure, a ladder structure, a cage type (completely condensed cage type) structure, and an incomplete cage type structure (which is a partially cleaved structure of a cage type structure; e.g., a structure lacking a part of silicon atoms in a cage type structure, and a structure in which a silicon-oxygen bond is cleaved in a part of a cage type structure).

R^{b}-SiO_{3/2} ... (Q)

In Formula (Q), R^{b} represents a monovalent organic group.

Here, the silane compound having the basic structure represented by Formula (Q) has the specific cationic polymerizable group.

Examples of the monovalent organic group include the specific cationic polymerizable group and, in addition, ethylenically unsaturated groups such as an acryloyl group, a methacryloyl group, a vinyl group, and a styryl group, and the specific cationic polymerizable group is preferred.

The silane compound having the basic structure represented by Formula (Q) has the specific cationic polymerizable group, preferably has three or more specific cationic polymerizable groups, and more preferably has four or more specific cationic polymerizable groups.

The average particle size of silsesquioxane or a derivative thereof is often 0.5 to 200 nm, and is preferably 1 to 50 nm.

An example of the measuring method of the average particle size is a method of measuring the average particle size of the inorganic particles described later.

Examples of the compound A include, as silsesquioxane or a derivative thereof, SQ series (such as OX-SQ TX-100, OX-SQ SI-20, OX-SQ HDX, AC-SQ series and MAC-SQ series available from Toagosei Co., Ltd.); other than silsesquioxane or a derivative thereof, Shofree (registered trademark) series (such as PETG, CDMDG, and BATG available from Showa Denko K.K.); Denacol series (such as EX-614B, EX-313, EX-512, EX-321, and EX-321L available from Nagase ChemteX Corporation); and KR-470 (Shin-Etsu Chemical Co., Ltd.).

A single kind of the compound A or two or more kinds thereof may be used.

The compound A content is preferably 5 to 60 mass%, more preferably 10 to 50 mass%, and even more preferably 15 to 40 mass% with respect to the total solids in the specific polymer-synthesizing composition from the viewpoint of prevention of gelation.

### (Mixing Step)

The method of manufacturing the liquid composition preferably includes a mixing step after the cationic polymerization step.

The mixing step is a step of mixing various components that can be contained in the liquid composition.

For the mixing step, a step of mixing the liquid composition obtained through the foregoing cationic polymerization step with the compound B is preferred.

The compound B is as described above.

An example of the mixing method is a method in which various components of the specific polymer-synthesizing composition are mixed.

### (Other Steps)

The method of manufacturing the liquid composition may include other steps than the steps described above.

Examples of the other steps include a solvent removal step and a filtration step.

The solvent removal step is a step of removing the solvent from the liquid composition.

The solvent removal step may be carried out before or after each step, and is preferably a step of removing the protic solvent from the liquid composition after the cationic polymerization step and before the mixing step.

The liquid composition is favorably utilized as a composition for forming a hard coat layer on a base. When utilized as the composition for forming a hard coat layer, the liquid composition preferably contains the specific polymer, the inorganic particles, the alcohol solvent, and the compound B.

Examples of the base include a plastic spectacle lens base and a plastic base such as a plastic film.

Below, an embodiment in which the liquid composition is applied onto a plastic spectacle lens base is described in detail.

### <Spectacle Lens>

The liquid composition is favorably utilized to manufacture a spectacle lens.

An example of the spectacle lens is a spectacle lens including a spectacle lens base (e.g., plastic spectacle lens base) and a film (hard coat layer) formed using the above-described liquid composition and disposed on the spectacle lens base.

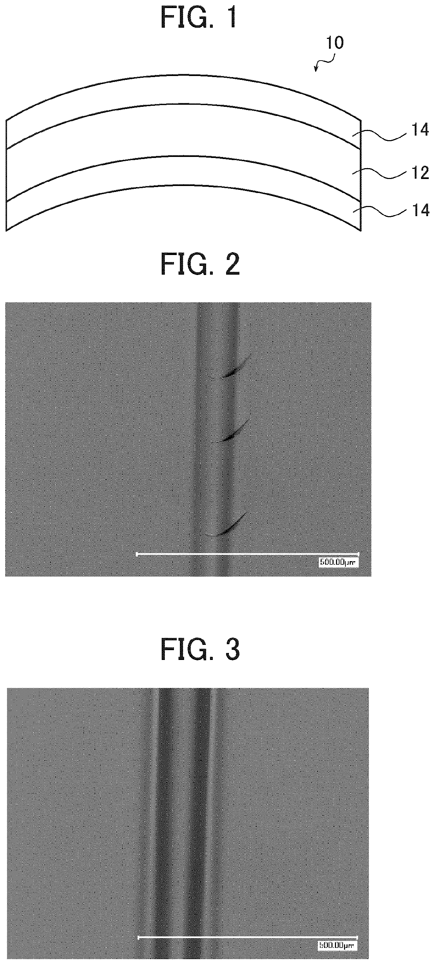

FIG. 1 is a cross-sectional view of a spectacle lens of an embodiment.

A spectacle lens 10 shown in FIG. 1 includes a plastic spectacle lens base 12 and hard coat layers 14 separately disposed on the opposite sides of the plastic spectacle lens base 12. The hard coat layers 14 are layers formed using the liquid composition described above.

While each hard coat layer 14 is disposed in direct contact with the plastic spectacle lens base 12 in FIG. 1, another layer (e.g., a primer layer) may be disposed between the plastic spectacle lens base 12 and the hard coat layer 14. That is, the hard coat layer 14 may be disposed directly on or indirectly, via another layer, above the plastic spectacle lens base 12.

In addition, while the hard coat layers 14 are separately disposed on the opposite sides of the plastic spectacle lens base 12 in FIG. 1, the hard coat layer 14 may be disposed only on one side of the plastic spectacle lens base 12.

Members included in the spectacle lens 10 are described below in detail.

### (Plastic Spectacle Lens Base)

An example of the plastic spectacle lens base is a finished lens that is obtained through optical finishing and shaping according to a desired power for both the convex and concave surfaces.

Exemplary types of plastic (such as resin) constituting the plastic spectacle lens base include acrylic resin, methacrylic resin, thiourethane resin, allyl resin, episulfide resin, polycarbonate resin, polyurethane resin, polyester resin, polystyrene resin, polyethersulfone resin, poly-4-methylpentene-1 resin, diethylene glycol bisallyl carbonate resin (such as CR-39), and polyvinyl chloride resin.

The thickness of the plastic spectacle lens base is often 1 to 30 mm for the sake of handleability.

The refractive index of the plastic spectacle lens base is often 1.60 to 1.74.

The plastic spectacle lens base is preferably translucent, and may be either transparent or non-transparent. In addition, the plastic spectacle lens base may be colored.

### (Hard Coat Layer)

The hard coat layer is a layer disposed on or above the plastic spectacle lens base and imparting scratch resistance to the plastic spectacle lens base.

The hard coat layer is a layer formed using the liquid composition described above.

An example of the method of forming the hard coat layer is a method involving applying the liquid composition described above onto the plastic spectacle lens base to form a coating and subjecting the coating to heating treatment or curing treatment such as light irradiation treatment. The formation of the coating may optionally be followed by drying treatment such as heating treatment.

Examples of the method of applying the liquid composition onto the plastic spectacle lens base include known methods such as dip coating, spin coating, spray coating, ink jet coating, and flow coating.

When dip coating is employed for instance, the plastic spectacle lens base is immersed in the liquid composition and then pulled out and dried, whereby a coating with a predetermined coating thickness can be formed on the plastic spectacle lens base.

The coating thickness of the coating formed on the plastic spectacle lens base can be appropriately selected in accordance with the thickness of the hard coat layer.

For the conditions for heating treatment and light irradiation treatment, conditions suitable for the type of the polymerization initiator can be appropriately selected.

The heating temperature is often 40 to 120°C.

Examples of light used in the light irradiation treatment include a UV ray and a visible ray.

An example of the light source of the light may be a high-pressure mercury vapor lamp.

The cumulative light quantity during light irradiation is often 100 to 3,000 mJ/cm², and is preferably 100 to 1,500 mJ/cm² for the sake of productivity and curing properties of the coating.

The coating thickness of the hard coat layer is often 1 um or more, preferably 4 um or more, and more preferably 10 um or more. The upper limit thereof is often 50 um or less.

The coating thickness refers to the average coating thickness. Examples of the method of measuring the average coating thickness include a method involving measuring the coating thickness of the hard coat layer at given five points and calculating the arithmetic mean of the measurements, and a method with use of an optical coating thickness gauge.

### (Primer Layer)

The primer layer is a layer disposed between the base and the hard coat layer and serves to improve adhesion of the hard coat layer to the base.

An example of the material constituting the primer layer is a known material such as resin.

Examples of the resin include urethane resin, epoxy resin, phenol resin, polyimide resin, polyester resin, bismaleimide resin, and polyolefin resin.

Examples of the method of forming the primer layer include known methods.

For example, exemplified is a method involving applying a primer layer-forming composition including a predetermined resin onto the plastic spectacle lens base, optionally followed by curing treatment.

The coating thickness of the primer layer is often 0.3 to 2 um.

The coating thickness refers to the average coating thickness. An example of the method of measuring the average coating thickness is a method involving measuring the coating thickness of the primer layer at given five points and calculating the arithmetic mean of the measurements.

### (Antireflection Film)

The plastic spectacle lens may further include an antireflection film disposed on the hard coat layer.

The antireflection film is a layer having a function of preventing reflection of incident light. With the antireflection film, the plastic spectacle lens can have low reflection characteristics (wide-band low reflection characteristics) over the entire visible range of wavelengths from 400 to 700 nm.

The antireflection film may have a single layer structure or a multilayer structure.

For the antireflection film, an inorganic antireflection film is preferred. The inorganic antireflection film is an antireflection film constituted of an inorganic compound.

In a case where the antireflection film has a multilayer structure, it is preferable to have the structure in which a low refractive index layer(s) and a high refractive index layer(s) are alternately stacked. Examples of the material constituting the high refractive index layer include oxides of metals such as titanium, zircon, aluminum, niobium, tantalum, and lanthanum. Examples of the material constituting the low refractive index layer include silica.

Examples of the method of producing the antireflection film include dry methods such as vacuum evaporation, sputtering, ion plating, ion-beam assisted deposition, and CVD.

### [EXAMPLES]

The liquid composition is described below in further detail by way of examples and comparative examples; however, the present embodiment should not be construed as being limited to the following examples.

### <Liquid Compositions X1 to X2, Comparative Compositions x1 to x2>

The respective liquid compositions were prepared according to the following procedures.

### (Liquid Composition X1)

In a glass container with a stirrer, the compound A having three or more oxetanyl groups (OX-SQ TX-100 manufactured by Toagosei Co., Ltd.) (100.00 g) and colloidal silica (OSCAL-1432E, isopropanol dispersion liquid, solid content 30 mass%, manufactured by JGC Catalysts and Chemicals Ltd.) (326.80 g) were placed to form a mixture liquid, and the mixture liquid was heated and stirred for five hours while being boiled on a hot plate. The temperature of the mixture liquid was 83°C, i.e., boiling point of isopropanol. The glass container was sealed with a lid, and isopropanol was condensing on the inner wall of the container, thus being in a refluxed state.

The mixture liquid having been heated was cooled to room temperature over a night, thereafter butyl cellosolve (161.11 g) was added as a film forming solvent to the mixture liquid, and isopropanol was distilled and removed in a warm bath at temperature 40°C with the pressure being reduced using a rotary evaporator over two hours, whereby the liquid composition X1 was obtained.

### (Liquid Composition X2)

In a glass container with a stirrer, the compound A having four epoxy groups (Shofree PETG manufactured by Showa Denko K.K.) (4.00 g), colloidal zirconia (NanoUse OZ-S30K, methyl ethyl ketone dispersion liquid, solid content 30 mass%, manufactured by Nissan Chemical Corporation) (13.37 g), and methanol (6.49 g) were placed to form a mixture liquid, and the mixture liquid was heated and stirred for five hours while being boiled on a hot plate. The temperature of the mixture liquid was 65°C, i.e., boiling point of methanol. The glass container was sealed with a lid, and methanol was condensing on the inner wall of the container, thus being in a refluxed state.

The mixture liquid having been heated was cooled to room temperature over a night, thereafter the lid of the container was removed, and the mixture liquid was again heated and stirred for 30 minutes while being boiled to cause methanol be distilled and removed, whereby the liquid composition X2 was obtained.

### (Comparative Composition x1)

In a glass container with a stirrer, the compound A having three or more oxetanyl groups (OX-SQ TX-100 manufactured by Toagosei Co., Ltd.) (5.00 g) and colloidal silica (OSCAL-1432E, isopropanol dispersion liquid, solid content 30 mass%, manufactured by JGC Catalysts and Chemicals Ltd.) (16.34 g) were placed, whereby the comparative composition x1 was obtained.

In the comparative composition x1, the specific polymer was not found (cationic polymerization reaction of the compound A did not proceed).

### (Comparative Composition x2)

In a glass container with a stirrer, a compound having four epoxy groups (Shofree PETG manufactured by Showa Denko K.K.) (4.00 g) and colloidal zirconia (NanoUse OZ-S30K, methyl ethyl ketone dispersion liquid, solid content 30 mass%, manufactured by Nissan Chemical Corporation) (13.37 g) were placed, whereby the comparative composition x2 was obtained.

In the comparative composition x2, the specific polymer was not found (cationic polymerization reaction of the compound A did not proceed).

### <Change in Viscosity of Liquid Composition during Preparation>

The change in viscosity of each of the liquid compositions during its preparation was observed.

The liquid composition X1 and the liquid composition X2 each had a higher viscosity than that of the mixture liquid prior to progress of the cationic polymerization reaction (prior to heating treatment). This is probably because the inorganic particles (colloidal silica or colloidal zirconia) serve as the cationic polymerization initiator due to the heating treatment, causing the cationic polymerization of the compound A, whereby the specific polymer was synthesized.

### <Viscosity of Each Composition>

Of the obtained liquid composition X1, the viscosity (cP) at temperature of 20°C was measured using a cone and plate viscometer. The viscosity of the liquid composition X1 (20°C) was 157 cP.

### <Liquid Compositions Y1 to Y2, Comparative Liquid Compositions y1 to y2>

The respective liquid compositions were prepared according to the following procedures.

### (Liquid Composition Y1)

In a glass container with a stirrer, the liquid composition X1 (2.00 g), 22 mass% isopropanol solution (0.05 g) using polyether-modified silicone (DOWSIL L-7001 manufactured by Dow Corning Toray Co., Ltd.) as a leveling agent, and a thermal cationic polymerization initiator (SAN-AID SI-100L manufactured by Sanshin Chemical Industry Co., Ltd.) (0.02 g) were placed and mixed, whereby the liquid composition Y1 was obtained.

The liquid composition Y2 and the comparative compositions y1 to y2 were obtained by, in a similar manner to the foregoing liquid composition Y2, mixing the respective components in the amounts as shown in Table 1.

The unit of the numerical value in the column of each component in the following table is "parts by mass."

**[Table 1]**

| | | Liquid Composition Y1 | Liquid Composition Y2 | Comparative Composition y1 | Comparative Composition y2 |
|---|---|---|---|---|---|
| Liquid Composition X1 | | 2.00 | - | - | - |
| Liquid Composition X2 | | - | 17.37 | - | - |
| Comparative Composition x1 | | - | - | 2.00 | - |
| Comparative Composition x2 | | - | - | - | 17.37 |
| Leveling agent | DOWSIL L-7001 (isopropanol solution) | 0.05 | 0.54 | 0.05 | 0.54 |
| Thermal cationic polymerization initiator | SAN-AID SI-100L | 0.02 | 0.08 | 0.02 | 0.08 |

### <Example 1>

A convex surface of a plastic spectacle lens base (Nikon Lite 3AS, size 75ϕ, center thickness 2 mm, manufactured by Nikon-Essilor Co., Ltd.) made of thiourethane resin with refractive index of 1.60 was coated with the liquid composition Y1 by use of a spin coater, followed by heating at temperature of 100°C for 40 minutes to cause curing reaction, whereby a plastic base 1 having a hard coat layer was obtained.

### <Example 2>

A plastic base 2 having a hard coat layer was obtained in a similar manner to Example 1 except that the liquid composition Y1 was replaced with the liquid composition Y2 and that the heating was carried out at temperature 120°C for 60 minutes.

In Comparative Examples 1 to 2, plastic bases 3 to 4 each having a hard coat layer were obtained in accordance with Examples 1 and 2 except that the compositions and curing conditions were changed as shown in the following table.

### <Toughness>

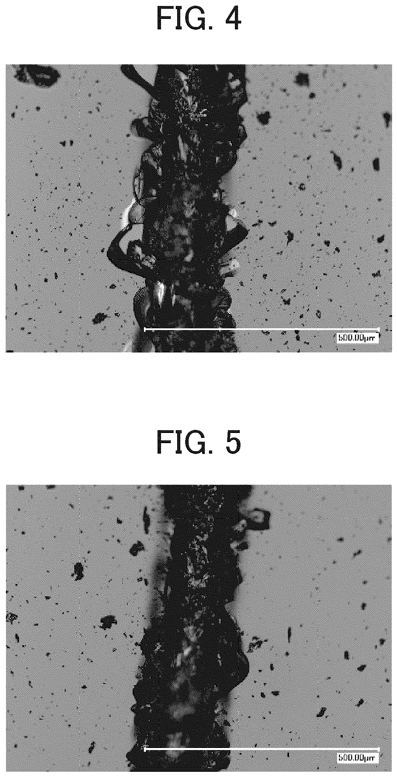

Using a friction and wear tester (Tribo Gear TYPE 40 available from Shinto Scientific Co., Ltd.), a scratch needle (BH0001-06 available from Shinto Scientific Co., Ltd.) made of sapphire with a needle tip radius of 0.05 mm and an apex angle of 60 degrees was brought into vertical contact with a convex surface of each plastic base having a hard coat layer and was moved once by a length of 20 mm at a rate of 600 mm/minute while being applied with a vertical load of 300 g. The needle scratch on the convex surface of each plastic base having a hard coat layer was observed by a digital microscope (VHX-1000 available from KEYENCE CORPORATION). FIGS. 2 to 5 show the needle scratches on the convex surfaces in toughness evaluation of Examples and Comparative Examples.

Toughness was rated according to the following criteria.
A: Few or no cracks
B: Many cracks
C: Convex surface of the base broken to pieces

### <Appearance of Hard Coat Layer>

The hard coat layer of each plastic base having a hard coat layer was visually observed.

### <FT-IR Measurement>

The hard coat layers of the obtained plastic bases 1 to 4 each having a hard coat layer were subjected to FT-IR measurement with a Fourier transform infrared spectrometer (JASCO FT/IR-6600, with use of diamond ATR).

Compared with Comparative Example 1, Example 1 showed small absorption of oxetanyl group around 980 cm⁻¹ and large absorption of hydroxyl group around 3388 cm⁻¹. Such difference in absorption intensity indicated generation of polyether chain due to polymerization of oxetanyl group.

In addition, compared with Comparative Example 2, Example 2 showed small absorption of epoxy group around 980 cm⁻¹ and large absorption of hydroxyl group around 3410 cm⁻¹. In Example 2, additional absorption bands were observed around 1455 cm⁻¹ and 1195 cm⁻¹, and these absorption bands are derived from the CH bond in the polyether structure.

The coating thicknesses of the hard coat layers shown in the table were measurement values obtained by measurement with an optical coating thickness gauge.

**[Table 2]**

| | | Example 1 | Example 2 | Comparative Example 1 | Comparative Example 2 |
|---|---|---|---|---|---|
| Composition | | Liquid composition Y1 | Liquid composition Y2 | Liquid composition y1 | Liquid composition y2 |
| Curing condition | | 100°C, 40 min. | 120°C, 60 min. | 100°C, 40 min. | 120°C, 60 min. |
| Plastic base having hard coat layer | | Base 1 | Base 2 | Base 3 | Base 4 |
| Coating thickness of hard coat layer | | 47.4µm | 12.4µm | 17.5µm | 14.8µm |
| Load on scratch needle | | 300g | 300g | 300g | 300g |
| Results | Toughness | A | A | C | C |
| | Scratch on base convex surface | Fig. 2 | Fig. 3 | Fig. 4 | Fig. 5 |
| | Appearance of hard coat layer | Colorless and transparent | White and transparent | Colorless and transparent | Yellow and transparent |

As shown in Table 2, it was confirmed that a hard coat film having excellent toughness was obtained by using the liquid composition of the present embodiment.

While the hard coat layers of Examples experienced generation of linear scratches, the hard coat layers of Comparative Examples were broken to pieces. In other words, as shown by the result of FT-IR measurement, it is presumed that a hard coat layer formed using the specific polymer generated through prepolymerization of the compound A as in Examples has high crosslink density therein, resulting in the improved hardness and toughness.

### DESCRIPTION OF SYMBOLS

- 10: spectacle lens
- 12: plastic spectacle lens base
- 14: hard coat layer

## Claims

1. A liquid composition comprising a polymer obtained by cationically polymerizing a cationic polymerizable group in a cationic polymerizable group-containing compound, the cationic polymerizable group being selected from the group consisting of an epoxy group and an oxetanyl group.

2. The liquid composition according to claim 1, wherein the cationic polymerizable group-containing compound contains three or more of the cationic polymerizable groups.

3. The liquid composition according to claim 1 or 2, wherein the polymer contains the cationic polymerizable group.

4. The liquid composition according to any one of claims 1 to 3, wherein the polymer is obtained by cationically polymerizing the cationic polymerizable group in the cationic polymerizable group-containing compound in a solution containing a protic solvent.

5. The liquid composition according to claim 4, wherein the protic solvent contains a solvent selected from the group consisting of water and an alcohol solvent.

6. The liquid composition according to any one of claims 1 to 5, further comprising inorganic particles,
wherein the inorganic particles include one or more kinds of metal oxide particles selected from the group consisting of SiO₂, Al₂O₃, SnO₂, ZrO₂, and TiO₂.

7. A hard coat layer formed using the liquid composition according to any one of claims 1 to 6.

8. A spectacle lens comprising:
a spectacle lens base; and
the hard coat layer according to claim 7 disposed on the spectacle lens base.
